**Europäisches Patentamt**

(19) **European Patent Office**

**Office européen des brevets**

(11) Publication number : **0 358 908 B1**

(12) # EUROPEAN PATENT SPECIFICATION

(45) Date of publication of patent specification :
**28.10.92 Bulletin 92/44**

(51) Int. Cl.[5] : **E04F 13/08, E04F 15/08, B44C 5/06, B44F 9/04, C04B 26/00, C04B 41/45**

(21) Application number : **89113953.7**

(22) Date of filing : **28.07.89**

(54) **A panel, a method for producing the same, and a method for treating the surface of a building and the like.**

(30) Priority : **12.08.88 JP 201487/88**
**25.11.88 JP 297331/88**

(43) Date of publication of application :
**21.03.90 Bulletin 90/12**

(45) Publication of the grant of the patent :
**28.10.92 Bulletin 92/44**

(84) Designated Contracting States :
**DE FR GB IT**

(56) References cited :
**DE-A- 2 135 018**
**DE-A- 2 254 755**
**FR-A- 1 565 606**
**FR-A- 2 354 431**

(73) Proprietor : **Osada, Hideharu**
**12-1, Tomiokita 2-chome**
**Nara-shi Nara (JP)**

(72) Inventor : **Osada, Hideharu**
**12-1, Tomiokita 2-chome**
**Nara-shi Nara (JP)**

(74) Representative : **Dipl.-Ing. H. Hauck, Dipl.-Ing. E. Graalfs, Dipl.-Ing. W. Wehnert, Dr.-Ing. W. Döring**
**Neuer Wall 41**
**W-2000 Hamburg 36 (DE)**

**EP 0 358 908 B1**

Jouve, 18, rue Saint-Denis, 75001 PARIS

## Description

The present invention relates to a method of manufacturing a panel according to the preamble of claim 1 or, respectively of treating a surface of a building or the like according to the preamble of claim 3.

Panels above referred to enhance the water resistance and weatherability of a building and improve the external appearance. Besides applying the panels to the outer wall of a building, the panels made according to the invention may be used as well on inner walls or the sealing of a building and still further may be used as a ground pavement. Instead of fixing the panels to the outer wall of a building, the wall itself may be treated.

Conventional methods for finishing an outer wall of a building are methods of laying tiles, spreading synthetic resin and the like.

However, laying tiles takes much time and requires skilled people. Finishing by spraying a synthetic resin is easy in operation and its construction period is short, but the finished surface does not show a luxury impression.

Recently, as a beautiful appearance is required strongly, a conventionally practiced washing-treating-process is reconsidered. The washing-treating-process is conducted by adhering small natural stones (particle diameter: 3-10 mm) on a wall surface and the like, making the surface flat by a troweller and the like and watering thereover to relieve said stones later. This has an excellent appearance and weatherability.

Thus it is an excellent construction method, but the operation requires a high skill, and there are few builders who can manage it now. This leads to high costs.

To produce a wall panel or the like, it has been known (DE-A-22 54 755) to apply a plastic adhesive to a substrate, for example a chip board, then placing tiles or pebbles into the adhesive coating which is then thermoset to obtain a safe bonding. The size of the granulate to be applied to a panel may be in the range of 0.1 to 10, preferably 2 to 5 mm (FR-A-2,354,431).

The object of the present invention is to provide a method of producing a panel or, respectively treating a wall of a building so as to obtain a pattern of different color, while acchieving the same external appearance obtained by the washing-treating-process above referred to, together with a good weatherability.

The object referred to is solved by the features of claim 1 or, respectively the features of claim 3.

The method according to the invention allows to produce a panel or, respectively to treat a surface resulting in a pattern of different colors.

Furthermore, the panel according to the present invention provides an external appearance like one obtained by a washing-treating-process by adhering it to a building and the like, the method for treating the surface according to the present invention provides an external appearance like one obtained by a washing-treating-process by carrying out the treating method directly to the building.

## BRIEF DESCRIPTION OF THE DRAWINGS

Fig. 1 is a partial perspective view showing an example of a panel according to the present invention.

Fig. 2 is a partial enlarged sectional view of Fig. 1.

Fig. 3 is a rough process view showing a producing method according to the present invention.

Fig. 4 is a rough process view showing another example of a producing method according to the present invention.

Fig. 5 is a perspective view of a panel manufactured with the method of Fig. 4.

Fig. 6 shows an example of a method according to the present invention, wherein (a) to (e) of Fig. 6 is a sectional view showing operation processes.

Fig. 7 shows another example of a method according to the present invention, wherein (a) to (i) of Fig. 7 is a sectional view showing operation processes.

Fig. 8 is a plan view of Fig. 7(i).

## DETAILED DESCRIPTION OF THE INVENTION

The present invention is described in detail along claims.

At first, a panel according to the present invention is described.

"a sheet having cohesiveness " referred in this specification is a rubber form substrate having adhesiveness semipermanently, a plastic sheet coated an adhesive or the like. The rubber form substrate having adhesiveness semipermanently is, for example, commercially available uncured butyl rubber sheet and the like as a representative.

The goods of which the tensile strength is improved by holding a net or strings therein is on the market, and it is preferable. Of course, it is not limited to this, if the rubber has the above characteristics, it may be used.

Thickness of the rubber sheet is not particularly limited, but about 0.5 ~3.0mm is preferable.

It is possible to use a plastic sheet coated an adhesive substituted for such a rubber sheet. If a pressure-sensitive adhesive is coated thereon, the same adhesiveness as said butyl sheet is caused.

The adhesiveness is required only a fixing power to adhere necessary stones so that the necessary stones do not fall off, and it is not necessary to adhere and fix completely like resin cures. This is one of the characteristics of this invention that the inventor devised in order to adhere natural stones smoothly to some extent.

The adhesiveness may exist only on one side which the stones are adhered, that is, it is possible not to have cohesiveness on a back surface, but it is preferable to have cohesiveness on the back surface of the sheet when considering convenience in case of adhering on building and the like. There is no problem in butyl rubber sheet since it has cohesiveness on a back surface too.

If the sheet does not have cohesiveness on its back surface, it may need an adhesive when the sheet is adhere on a building and the like. Ordinary adhesive may be used in this case.

If the sheet has adhesiveness or cohesiveness on its back surface, it is preferable to apply peeling paper on the back surface for convenience for handling.

"Stones" referred in this specification are not only natural stones but also stones which are manufactured by baking, such as ceramics and the like. Pigment may be mixed to color variously.

Granular stones are not limited to granular form in a strict sense, but flat substance or ellipse substance is possibly used. The size is 2 ~20mm, and preferably 5~10mm. There are various colors in natural stones, and mixed-colored or single-colored stones may be used. Patterns may be formed by using special color stones at particular parts using a mold frame (like a stencil) mentioned later.

Granular stones may be manufactured by crashing natural stones in a predetermined size. The crashed stones may be arranged the shape by a granulater after being crashed.

The term "adhering closely" means that there is not an exposed portion of the sheet on the sheet, but it means that stones are adhered on almost whole area because it is logically impossible that there is not an exposed sheet portion at all.

The term "almost whole area " means that there is almost not an exposed portion in which a stone with the size similar to an adhered stone can be placed.

The term "synthetic resin coating" means that thermoplastics is dissolved, emulsified and dispersed by a solvent and the like, it is sprayed or spreaded to cover granular stones and said coated plastics are dried to solidify. The synthetic resin for coating dries naturally as it is, but it may be dried forcedly by a drier. A reactive curing type resin may be used for coating.

As examples of the synthetic resin, acrylic and epoxy resin are preferable. This synthetic resin is usually transparent to show colors of the granular stones, but colored resin may be used by mixing pigment thereto. Particularly using colored resin on a part to make pattern appears different beautiful appearance.

The synthetic resin coating is carried out in a factory, but optionally it may be carried out locally. That is, panels which are not sprayed the synthetic resin are placed on a local pavement and the like and then synthetic resin is spreaded or sprayed to coat thereover. An advantage of this method is that water proof and adhesion of joint portion are easy because the surface is coated after placing panels. If the construction is before coating the synthetic resin, there is an advantage that the panel can be kept in custody by rolling in a long length. As a result, since it is carried out in a long length, time and labor to carry out can be saved.

The panel can be adhered easily on a pavement or a wall surface of a building with adhesiveness (or with a separate adhesive) of synthetic rubber sheet and the like having cohesiveness. Particularly, when butyl rubber sheet is used, since it has strong adhesiveness and eternal cohesiveness to be able to endure long time use. Naturally water resistance is almost complete because it is synthetic rubber or plastic sheet, and since it retains elasticity for a long time, and it follows the crack, the expansion and contraction. Therefore, there is no fear to reduce waterproof by causing the crack in the rubber sheet itself.

The size of the rubber sheet is not limited, but for the easiness of handling, about 1m x 2m is preferable. Of course, the size itself has nothing to do with the present invention.

It may be decided appropriately depending on a use, a place to be used and the like.

When the panel is adhered on a large wall surface, the adjacent portion between panels is a problem. However, it can be joined without reducing waterproof property if granular stones are not adhered only predetermined width of one end of the rubber sheet to leave and the joined sheet is laid on the part to close up and down. Of course, the adjacent portion is made as joint portion and may be filled with adhesive material (synthetic resin adhesive such as acrylic emulsion and the like or inorganic adhesive such as mortar and the like).

If the rubber sheet has some thickness, only abutting can cohere by its adhesiveness to keep waterproof.

A method for producing the panel according to the present invention is described below.

The terms "continuously" or "intermittently" expresses how the rubber sheet is transferred and means that the rubber sheet is transferred continuously or intermittently.

The term "bringing the sheet upward to incline" means that the sheet is inclined upwardly and transferred and moved.

Spraying synthetic resin for coating and cutting the panel in a predetermined length do not matter which is earlier to be done. That is, it may be cut after coating or it may be coated after cutting.

A method to use a mold frame is as follows.

A mold frame of which the back surface is carried out peeling treatment (It is not necessary to conduct the treatment if the peeling is easy) is adhered on a rubber sheet. Granular stones are placed thereon, excessive stones are removed, then the mold frame is removed, stones of different color are adhered again on an area on which the mold frame was adhered to give patterns. Furthermore, a plurality of mold frames are adhered and said operations are conducted stepwise to give multi-color patterns. Any material such as paper, plastic sheet will be used for the material of the mold frame. The shape of the mold frame may be formed by punching and the like freely according to the pattern to be made.

Finally a method for treating the surface of building and the like is described in detail. In this method, it is preferable to carry out on the surface of a pavement and the like. This method is considered as a method which is carried out together with manufacturing said panel on the surface of building. That is, the rubber sheet is carried out on the pavement, granular stones are placed thereon and synthetic resin coating is conducted thereover, and the method itself is the same as afore-mentioned method for manufacturing a panel.

However, since the treatment is carried out on the surface of pavement directly in this method, liquid or half-solid adhesive may be spreaded on the surface of pavement instead of the rubber sheet. The adhesive recited in claim 6 includes the above two meanings. The adhesive used here is the same as the mentioned before.

As a method for removing excessive granular stones, there is a method to suction by vacuum apparatus or to sweep or scrape away to remove, levelling the surface by a flat plate.

In this method, making pattern by using said mold frame is possible as well.

EMBODIMENT

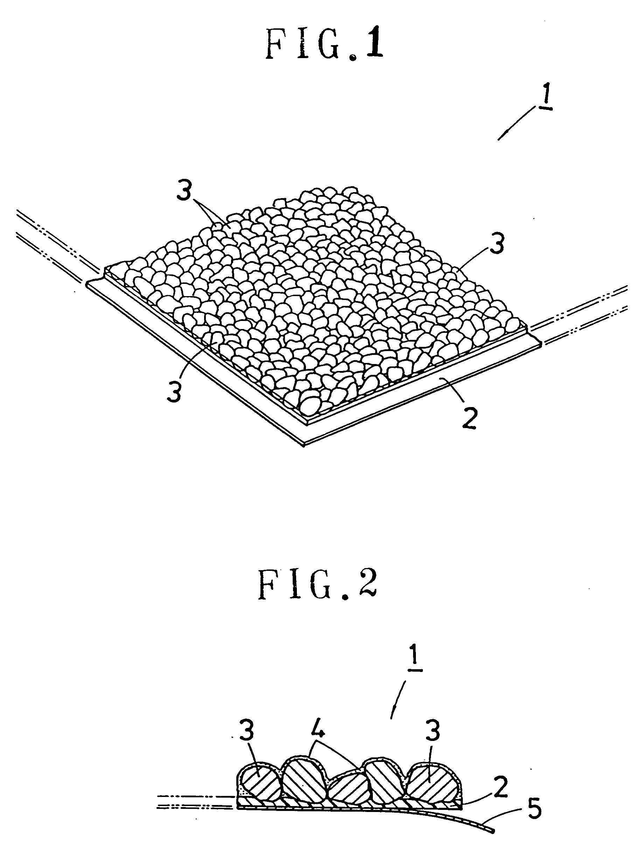

Fig. 1 is a perspective view showing an example of a panel 1 according to the present invention. Natural stones 3 are adhered closely on butyl rubber sheet 2. Fig. 2 is an enlaraged partial sectional view of Fig. 1. Transparent synthetic resin 4 for coating is spreaded on the surface. Peeling paper 5 is adhered on the back surface.

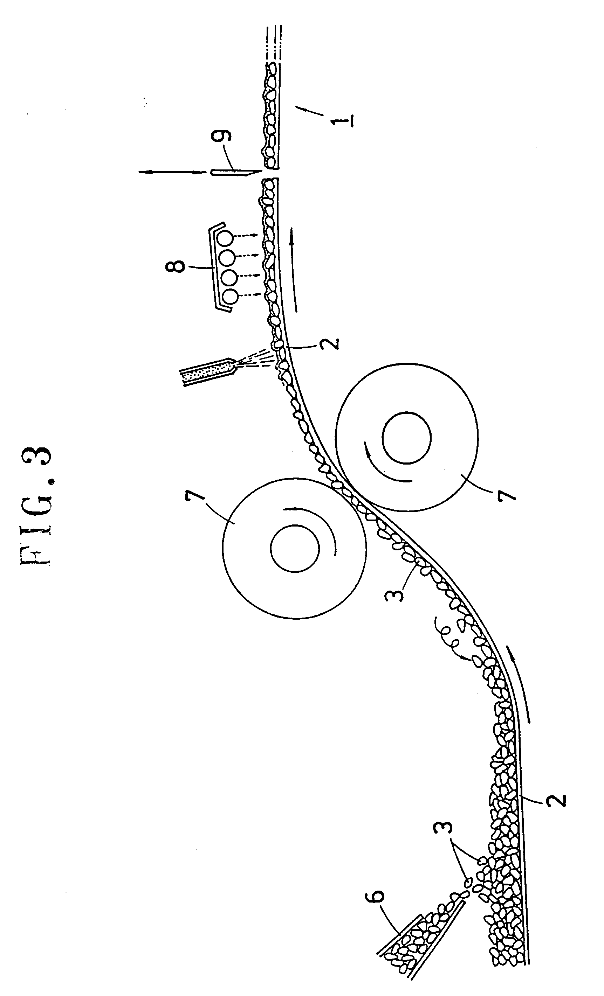

Fig. 3 is an outline process view showing a method for manufacturing the panel 1. A plurality of natural stones 3 are placed by natural falling from a feeder 6 on said butyl rubber sheet 2 which is advanced from left side. And said butyl rubber sheet 2 is advanced inclinedly to lead to press rollers 7. At this time stones 3 which are not adhered to the butyl rubber sheet 2 fall down by gravitation. The stones-adhered sheet is pressed by said press rollers 7 to ensure the adhesion and to be almost flat. After that it is spreaded with synthetic resin 4 thereon, dried by a drier 8 and cut by a cutter 9.

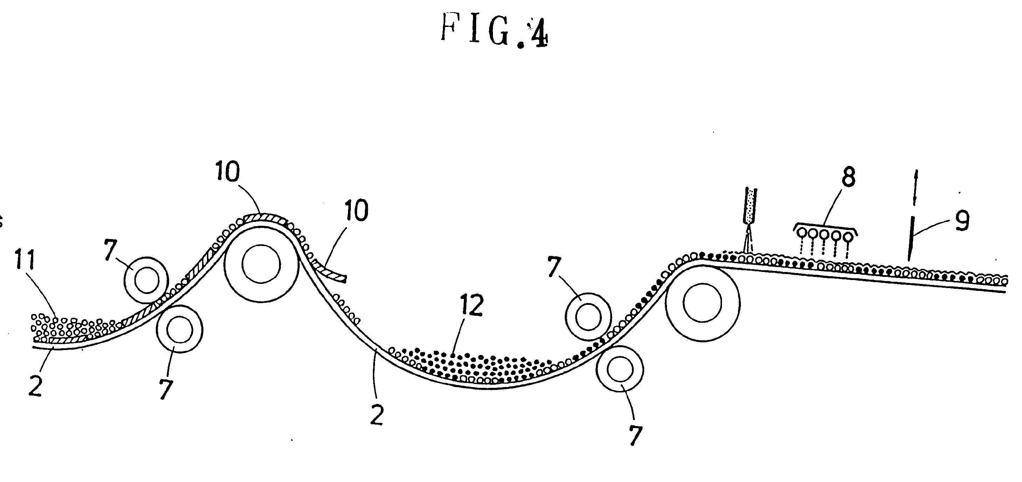

Fig. 4 shows another process view in case of making patterns by using a mold frame 10. Butyl rubber sheet 2 adhered with the mold frame 10 is advanced and natural stones 3 are placed thereon by falling off the natural stones with the same manner as shown in Fig. 3. In this case, the natural stones 11 are of only one selected color. Then stones 11 are not adhered at a part which the mold frame is adhered, but adhered only at a part without the mold frame 10 and at a part which is punched in the mold frame 10.

And the sheet 2 is moved upwardly as well as in Fig. 3 to fall the stones 11 which are not adhered, and then pressed by the press rollers 7. The mold frame 10 is peeled and natural stones 12 which are of different color from stones 11 are placed again. In this case, the stones 12 are adhered not to a part on which the stones 11 has already been adhered but to a part on which the mold frame 10 was adhered. Then excessive stones are fallen by moving the sheet 2 upward and the sheet 2 is pressed by the press rollers 7. Similarly the sheet is sprayed with resin, dried and cut.

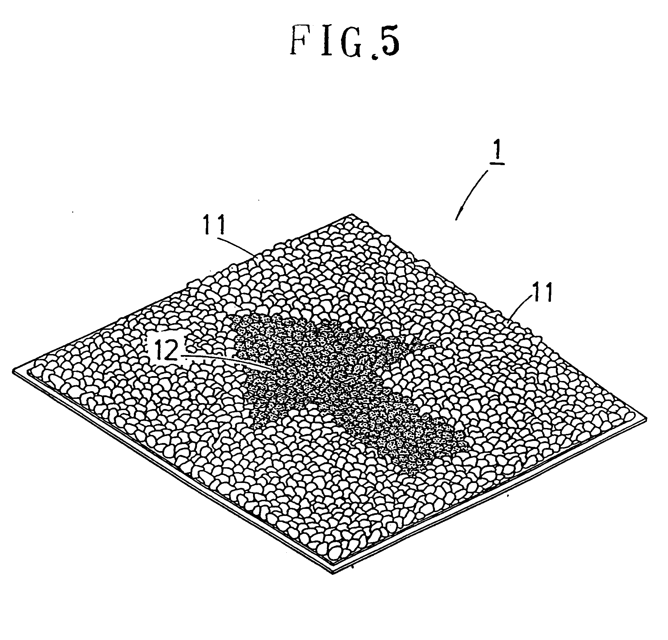

In this case, a panel 1 with pattern like Fig. 5 can be manufactured if the mold frame is punched in a form of an arrow.

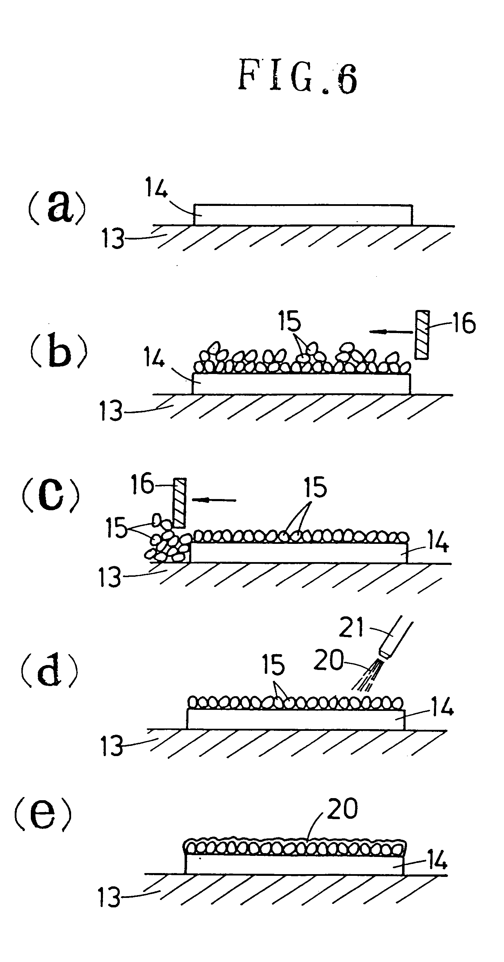

Fig. 6 is a sectional view showing processes of the method for treating the surface according to the present invention. Fig. 6(a) shows a process of spreading an adhesive 14 on the surface of pavement 13. Fig. 6(b) shows a state of placing a plurality of natural stones 15 on the adhesive 14. In this state, stones of the lowest layer are adhered with the adhesive 14. And a state that a remover 16 is going to remove excessive natural stones is shown. Fig. 6(c) shows a state that the remover 16 removes the excessive natural stones 15 and the treated surface is made smooth. Next, synthetic resin (polymethyl methacrylate and the like) 20 is spreaded by spraying thereon by a spraying means 21 (Fig. 6(d)). Pressing stones from upward to make the surface flatter and to adhere the stones to the adhesive layer strongly may be conducted prior to coating the synthetic resin 20. Fig. 6(e) shows a state that the synthetic resin coating is finished. The synthetic resin 20 may be dried naturally or by a dryer. At this time, treating the surface according to the present invention is completed.

Small sized natural stones are disposed on the surface of a building at random to provide an external appearance like washing-treating-surface conventionally adapted to the external facing of a building and to present a fine view.

With the synthetic resin coating 20, stones do not slip or come off. Crack ring does not occur in a treated layer because of the elasticity of the synthetic resin and an adhesive layer of lower layer.

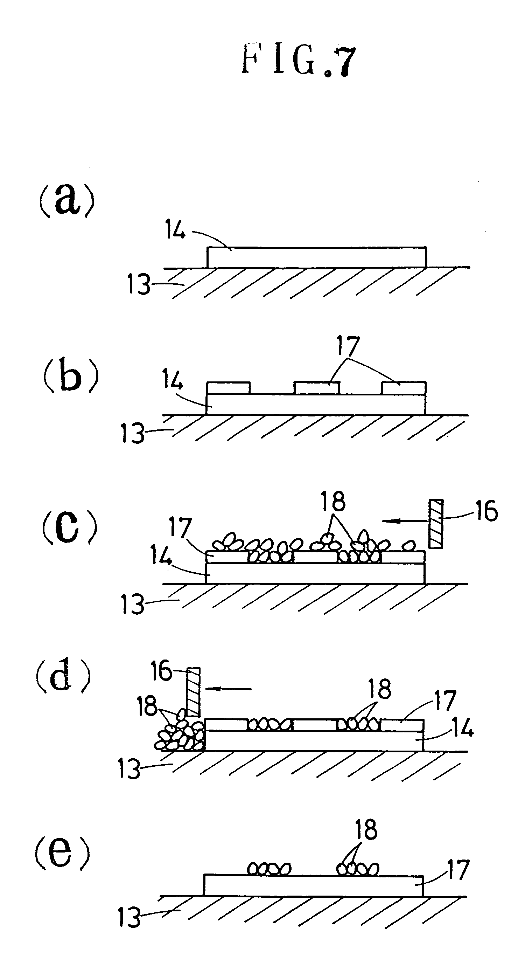

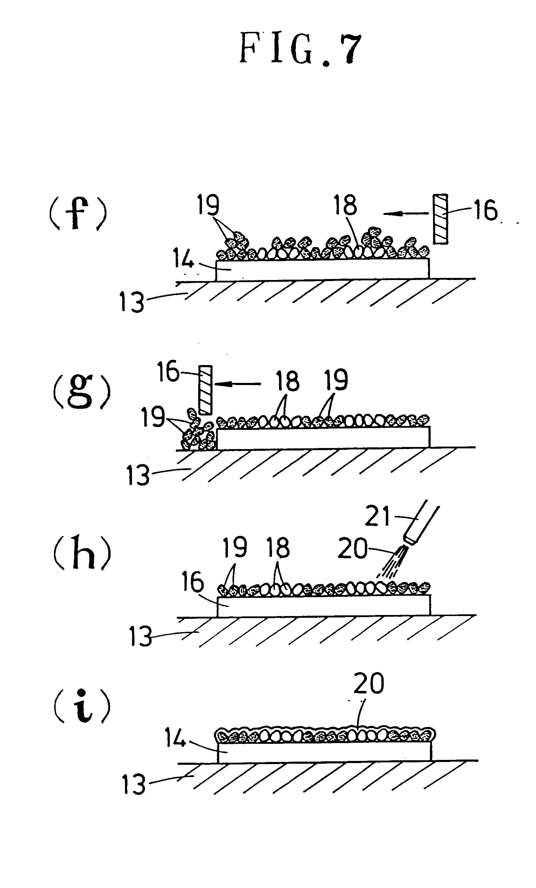

Fig. 7 shows processes of another embodiment of the method for treating surface according to the present invention.

Fig. 7(a) is a view of the same state as Fig. 6(a). Mold frames 17 are placed on the adhesive layer 14. (Fig. 7(b). The back surface of this mold frame 17 is conducted a peeling treatment. Stones 18 of a predetermined color (here brown) are placed thereon. Excessive brown stones 18 are removed by a remover 16 as well as in Fig. 6 (Fig. 7(c)). Since there is no adhesiveness on the surface of the mold frame 17, stones thereon are removed. If left, they can be removed together with the mold frames 17. Fig. 7(d) shows that the excessive brown stones 18 are removed and the stones 18 are adhered closely at the part which the adhesive layer 14 is exposed.

Next, the mold frame 17 is removed. (Fig. 7(e)), wherein the brown stones 18 are adhered only a part which the mold frames do not cover and the adhesive layer is exposed at remainder. Natural stones of another color (here black) are placed excessively. (Fig. 7(f)). Again excessive black stones 19 are removed by the remover 16, and then synthetic resin 20 is spreaded by a spraying means 20. (Fig. 7(g), (h)).

When spreading of whole surface is finished, the treatment is finished.

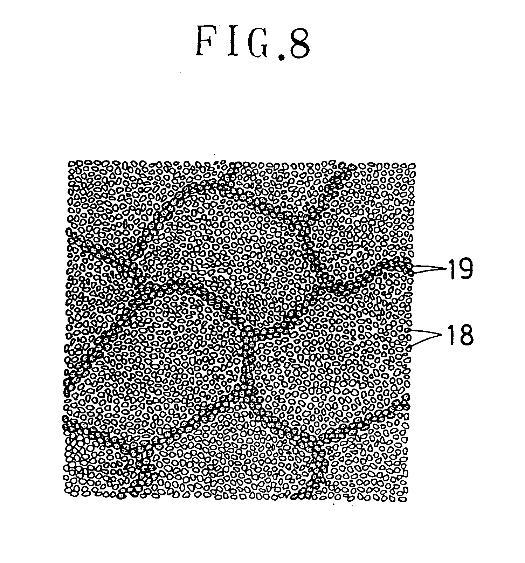

Fig. 8 is a plan view of a pavement and the like in a state of Fig. 7(i). It can be seen that pattern of joint portion appears clearly.

## EFFECT OF THE INVENTION

There are remarkable advantages as mentioned below in the panel, the method for producing the same, and the method for treating surface of a building and the like according to the present invention.

PANEL:

① A finishing treatment can be done easily by only adhering the panels on a pavement or a building. That is, construction time of the finishing treatment process is saved remarkably.
② The external appearance is very beautiful and almost the same as the appearance of a conventional washing- treating-process.
③ Waterproof is ensured not to cause crack and peeling.
④ Adhesion and waterproof of joint portions are easy in case of carrying out synthetic resin coating locally. And also carrying out can be done in a long length.

METHOD FOR PRODUCING THE PANEL:

① Said panel is manufactured quite easily.
② This method required a simple apparatus and no special one is required.
③ When a mold frame is used, patterns can be made easily to provide a fine view.

METHOD FOR TREATING THE SURFACE:

① Finishing of the surface of a pavement and the like can be done with a simple operation to provide a fine view.
② In a method using mold frames, various patterns such as joint portion pattern, mosaic pattern and the like are made easily at a local place.
③ Since small granular articles are spreaded all over the surface, small patterns and various colors are expressed.
④ Since natural stones, ceramics and the like are used and synthetic resin is coated thereon, weatherability and wear resistance is excellent.

## Claims

1. A method of manufacturing a panel comprising the steps of: moving a sheet having cohesiveness continuously or intermittently, placing granular stones, of which the diameter is about 2 to 20 mm on said sheet from above, then spreading a synthetic resin in a liquid form and drying the resin, characterized by
   a) placing at least one mold frame which is punched in various patterns on said sheet having cohesiveness before said granular stones are placed on said sheet, so that said granular stones are adhered only on predetermined portions,
   b) bringing the sheet into an inclined position so that the granular stones which are not adhered to the sheet directly fall from the sheet,
   c) passing the street in a state that there are almost no stones left on the sheet which are not adhered to the sheet between press rollers,
   d) removing said mold frame and
   e) adhering granular stones of different color on the remaining portions of said sheet and repeating the steps b) and c).

2. The method of claim 1, wherein adhering granular stones of different color is repeated using a plurality of mold frames.

3. A method of treating a surface of a building or the like comprising the steps of: spreading an adhesive on the surface, closely adhering granular stones of which the diameter is about 2 to 20 mm on said adhesive and applying a synthetic resin coating thereon, characterized by
   a) placing at least one mold frame which is punched in various pattern on said surface before said granular stones are placed on said surface, said granular stones are adhered only on predetermined portions and
   b) removing said mold frame and adhering granular stones of different color on the remaining portions of said surface.

4. The method of claim 3, wherein said granular stones are placed on said adhesive excessively and stones except the stones adhered by adhesiveness are suctioned to be removed by a vacuum apparatus.

5. The method of claim 3, wherein said granular stones are placed on said adhesive excessively and stones except the stones adhered by adhesiveness are scraped away for removal.

**Patentansprüche**

1. Verfahren zum Herstellung einer Tafel mit folgenden Schritten: Transportieren eines Bandes mit Kohäsion kontinuierlich oder intermittierend, Auftragen von Steingranulat mit einem Durchmesser von etwa 2 bis 20 mm von oben her auf das Band, Auftragen von Kunststoffen in flüssiger Form und Trocknen des Kunststoffs, gekennzeichnet durch
   a) mindestens eine Schablone, die in unterschiedlichen Mustern gestanzt ist, wird auf dem Band mit Kohäsion aufgelegt, bevor das Steingranulat aufgetragen wird, so daß das Steingranulat nur an vorbestimmten Flächen haftet,
   b) das Band wird in eine geneigte Position gebracht, so daß das nicht haftende Steingranulat direkt vom Band fällt,
   c) das Band wird durch Druckrollen in einen Zustand geführt, in dem nahezu keine Steine auf dem Band vorhanden sind, die nicht am Band anhaften,
   d) die Schablone wird entfernt und
   e) Steingranulat unterschiedlicher Farbe wird auf die freien klebenden Flächen des Bandes aufgetragen, worauf die Schritte b) und c) wiederholt werden.

2. Verfahren nach Anspruch 1, bei dem das Ankleben von Steingranulat unterschiedlicher Farbe unter Verwendung mehrerer Schablonen wiederholt wird.

3. Verfahren zur Flächenbehandlung eines Gebäudes o. ä. mit folgenden Schritten: Auftragen eines Klebstoffs auf die Fläche, dichtes Ankleben von Steingranulat mit einem Durchmesser von etwa 2 bis 20 mm auf dem Klebstoff und Auftragen einer Kunststoffbeschichtung, gekennzeichnet durch
   a) mindestens eine Schablone, die in unterschiedlichen Mustern gestanzt ist, wird vor dem Auftragen des Steingranulats auf der Fläche angeordnet, wobei das Steingranulat nur an vorbestimmten Flächen angeklebt wird und
   b) die Schablone wird entfernt und Steingranulat unterschiedlicher Farbe wird an den übrigen Flächen angeklebt.

4. Verfahren nach Anspruch 3, bei dem das Steingranulat im Überschuß auf dem Klebstoff aufgetragen wird und die nicht anheftenden Steinchen mit einer Saugeinrichtung abgesaugt werden.

5. Verfahren nach Anspruch 3, bei dem das Steingranulat im Überschuß auf dem Klebstoff aufgetragen wird und nicht anhaftende Steinchen zum Entfernen weggekratzt wird.

**Revendications**

1- Procédé de fabrication d'un panneau, comprenant les phases suivantes: on déplace de façon continue ou intermittente une feuille ayant des propriétés de cohésion; on place sur ladite feuille, par au-dessus, de la pierre granulaire ayant un diamètre d'environ 2 à 20mm; on étale ensuite une résine synthétique sous forme liquide, et on sèche la résine, ce procédé étant caractérisé en ce que:
   a) avant la pose de ladite pierre granulaire sur ladite feuille ayant des propriétés de cohésion, on place sur cette feuille au moins un cadre formant moule qui est perforé suivant différents dessins, de manière que la pierre granulaire n'adhère que sur des parties prédéterminées de la feuille;
   b) on amène la feuille dans une position inclinée, de manière que la pierre granulaire n'ayant pas adhéré à la feuille tombe de celle-ci;
   c) on fait passer la feuille entre deux rouleaux presseurs lorsqu'elle se trouve dans un état dans lequel il ne reste presque plus sur elle de pierre n'ayant pas adhéré;
   d) on retire le cadre formant moule; et
   e) on colle de la pierre granulaire de couleur différente sur les parties restantes de la feuille, et on répète les phases b) et c).

2- Procédé suivantt la revendication 1, dans lequel on répète la phase de collage de pierre granulaire de couleur différente en utilisant plusieurs cadres formant moules.

3- Procédé de traitement de surface d'un bâtiment, ou analogue, comprenant les phases suivantes: on étale un adhésif sur ladite surface; on colle étroitement sur cet adhésif de la pierre granulaire ayant un diamètre d'environ 2 à 20mm, et on applique dessus un revêtement de résine synthétique, procédé caractérisé en ce que:
   a) avant que la pierre granulaire soit posée sur ladite surface, on place sur celle-ci au moins un cadre formant moule qui est perforé suivant différents dessins, la pierre granulaire n'adhérant que sur des parties prédéterminées, et
   b) on retire le cadre formant moule, et on colle de la pierre granulaire de couleur différente sur les parties restantes de ladite surface.

4 - Procédé suivant la revendication 3, dans lequel on dépose de la pierre granulaire en excès sur ledit adhésif, et on enlève la pierre, à l'exception de celle ayant adhéré sur l'adhésif, en l'aspirant au moyen d'un appareil à vide

5- Procédé suivant la revendication 3, dans lequel on pose la pierre granulaire en excès sur l'adhésif et on râcle la pierre pour l'enlever, à l'exception de celle ayant adhéré à l'adhésif.

# FIG.1

# FIG.2

FIG. 3

FIG.4

# FIG.5

# FIG.6

(a)

(b)

(c)

(d)

(e)

# FIG.7

(a)

(b)

(c)

(d)

(e)

# FIG.7

(f)

(g)

(h)

(i)

# FIG.8